# EUROPÄISCHE PATENTSCHRIFT

(11) **EP 2 748 573 B1**
(45) Veröffentlichungstag und Bekanntmachung des Hinweises auf die Patenterteilung: **10.10.2018**
(21) Anmeldenummer: 12753933.6
(22) Anmeldetag: 23.08.2012
(51) Int. Cl.: G01L 3/10, B62M 3/00, B62M 6/50, F16C 19/56

(54) **TRETLAGER**
BOTTOM BRACKET
BOÎTIER DE PÉDALIER

(30) Priorität: 27.08.2011 DE 102011111796
(43) Veröffentlichungstag der Anmeldung: 02.07.2014
(73) Patentinhaber: Schaeffler Technologies AG & Co. KG, 91074 Herzogenaurach (DE)
(72) Erfinder: DJAKOVIC, Boris, 90768 Fürth (DE); NEUBAUER, Markus, 96117 Lichteneiche (DE); SCHUH, Jörg, 91448 Emskirchen (DE); HERRLEIN, Alexander, 97714 Rottershausen (DE)
(86) Internationale Anmeldenummer: PCT/EP2012/066429
(87) Internationale Veröffentlichungsnummer: WO 2013/030089

(56) Entgegenhaltungen:
- EP-A2- 0 765 804
- DE-A1-102008 050 236
- JP-A- 8 297 059

## Beschreibung

### Gebiet der Erfindung

Die Erfindung betrifft ein eine Kraft- und/oder Drehmomentmessvorrichtung aufweisendes Tretlager, insbesondere eines Fahrrads mit elektrischem Hilfsantrieb.

### Hintergrund der Erfindung

Tretlager der eingangs genannten Art sind beispielsweise aus der DE 10 2007 062 156 A1 sowie aus der DE 10 2008 050 236 A1 bekannt. Diese Tretlager verwenden zur Drehmomentmessung eine magnetisierte Hohlwelle, wobei ein in der Hohlwelle wirkendes Drehmoment deren magnetische Eigenschaften von außen, das heißt von einem nicht rotierenden Teil aus, messbar ändert.

Die EP 0 765 804 A2 beschreibt ein Fahrrad mit einem Hilfsantrieb, umfassend eine Kontrolleinrichtung zur Erfassung einer Pedalkraft und einen Drehmomentsensor.

Die JP 8 297059 A offenbart einen Drehmomentsensor für ein Fahrrad.

### Aufgabe der Erfindung

Der Erfindung liegt die Aufgabe zugrunde, ein Tretlager mit Kraft- und/oder Drehmomentsensorik gegenüber dem genannten Stand der Technik insbesondere hinsichtlich der Montagefreundlichkeit und Bauraumausnutzung weiterzuentwickeln.

### Zusammenfassung der Erfindung

Diese Aufgabe wird erfindungsgemäß gelöst durch ein Tretlager mit den Merkmalen des Anspruchs 1. Insbesondere handelt es sich um ein
Tretlager mit
- einer Antriebswelle,
- zwei die Antriebswelle lagernden Wälzlagern unterschiedlicher Dimensionierung,
- einer axial zwischen den Wälzlagern angeordneten Messhülse zur Drehmomentmessung,
- einer in axialer Verlängerung der Messhülse angeordneten, mit dieser drehfest verbundenen, zur Verbindung mit einem Kettelblattträger vorgesehenen Abtriebshülse,
- einer Gleitlagerung zwischen der Abtriebshülse und der Antriebswelle,
- einem stirnseitig der Messhülse angeordneten Encoder, welcher zur Drehzahl- und/oder Drehsinnmessung der Antriebswelle vorgesehen ist,
- einer die Messhülse koaxial umgebenden, hülsenförmigen Auswerteeinheit, welche mit der Messhülse sowie mit dem Encoder zusammenwirkt,
   wobei das der Abtriebshülse benachbarte Wälzlager kleinere Wälzkörper, jedoch einen größeren Teilkreisdurchmesser als das gegenüberliegende, dem Encoder benachbarte Wälzlager aufweist, und wobei
- eine erste, dem Encoder zugewandte Seite der Auswerteeinheit per Schnappkontur drehfest relativ zu einem Außenring des dem Encoder benachbarten Wälzlagers gehalten ist, und an einer zweiten, dem Kettenblattträger zugewandten Seite der Auswerteeinheit diese eine radial nach außen ragende Montagehilfskontur zur Sicherung gegen Falschmontage der Auswerteeinheit aufweist..

Weiterbildungen des erfindungsgemäßen Tretlagers sind Gegenstand der abhängigen Ansprüche.

### Beschreibung der Zeichnungen

Nachfolgend werden mehrere Ausführungsbeispiele der Erfindung anhand einer Zeichnung näher erläutert. Hierin zeigen:
- Fig. 1 - 3: in verschiedenen Ansichten ein mit Kraftsensorik sowie mit und Drehzahl- oder zumindest Drehsinnsensorik ausgestattetes Tretlager,
- Fig. 4: ein zweites Ausführungsbeispiel eines mit Kraftsensorik sowie mit Drehzahl- oder zumindest Drehsinnsensorik ausgestattetes Tretlager,
- Fig. 5: ein Detail eines dritten Ausführungsbeispiels eines mit Kraftsensorik sowie mit Drehzahl- oder zumindest Drehsinnsensorik ausgestatteten Tretlagers.

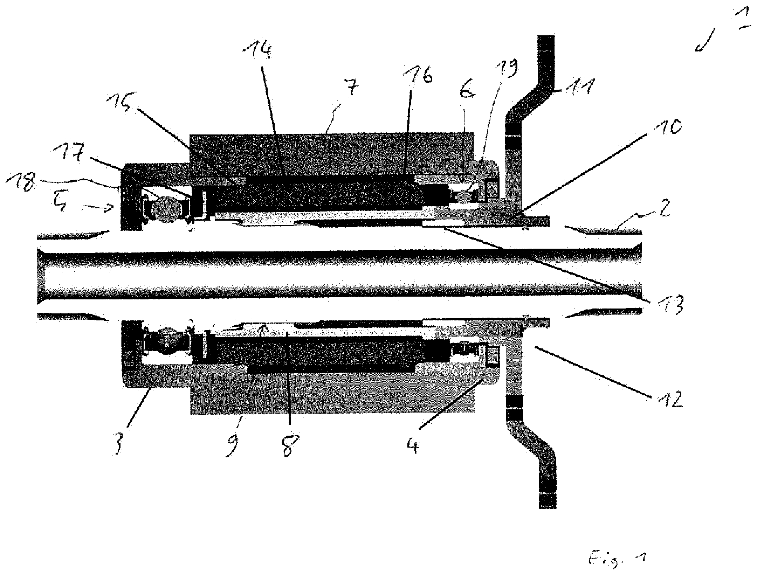

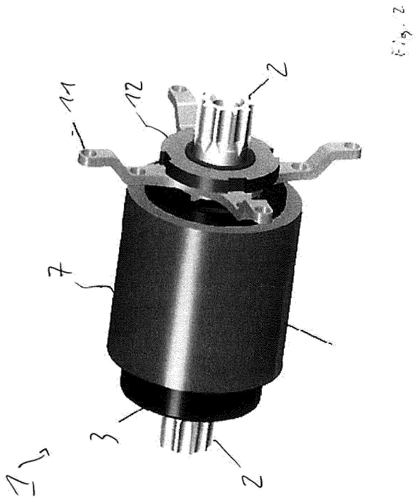

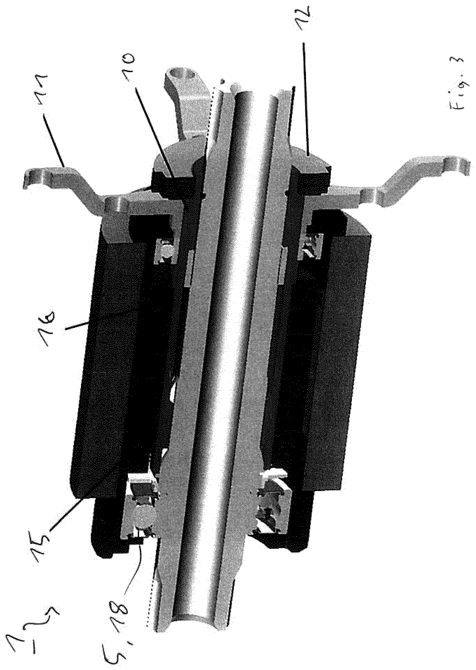

Das in den Figuren 1 bis 3 dargestellte Tretlager weist alle Merkmale der Ansprüche 1 bis 2 auf und ist zum Einbau in ein Fahrrad mit elektrischem Antrieb vorgesehen. Hinsichtlich der prinzipiellen Funktion des Tretlagers 1 wird auf den eingangs zitierten Stand der Technik verwiesen. Einander entsprechende oder gleichwirkende Teile sind in allen Figuren mit den gleichen Bezugszeichen gekennzeichnet.

Ein insgesamt mit dem Bezugszeichen 1 gekennzeichnetes Tretlager weist eine hohle Antriebswelle 2 auf, an welcher zwei nicht dargestellte Pedale befestigbar sind. Die Antriebswelle 2 ist in zwei Gehäuseteilen 3,4, welche mit Bezugnahme auf FIG 1 ohne Beschränkung der Allgemeinheit als linkes Gehäuseteil 3 und rechtes Gehäuseteil 4 bezeichnet sind, mittels zweier Wälzlager 5,6 gelagert. Die beiden Gehäuseteile 3,4 sind in einem Rahmenteil 7 des Fahrrads nicht drehbar gelagert.

Das durch den Fahrer der Fahrrads von den beiden Pedalen in die Antriebswelle 2 eingeleitete Drehmoment wird an eine magnetisierte Messhülse 8 weitergeleitet, die die Antriebswelle 2 konzentrisch umgibt und einseitig, das heißt lediglich im Bereich einer ihrer Stirnseiten, drehfest mittels einer Verzahnung 9 mit der Antriebswelle 2 verbunden ist. Auf der zweiten, nicht mit der Antriebswelle 2 verbundenen Stirnseite der Messhülse 8 ist mit dieser eine Abtriebshülse 10 verbunden.

Die Abtriebshülse 10, welche eine gerade Verlängerung der Messhülse 8 darstellt, ist drehfest verbunden mit einem Kettenblattträger 11, auf welchen in an sich bekannter Weise mindestens ein Kettenblatt des Fahrrads geschraubt wird. Auf der äußeren, den Wälzlagern 5,6 abgewandten Seite des Kettenblattträgers 11 befindet sich eine Kontermutter 12, welche den festen Sitz des Kettenblatträgers 11 sichert.

Im Übergangsbereich zwischen der Messhülse 8 und der Abtriebshülse 10 ist diese Anordnung aus Messhülse 8 und Abtriebshülse 10 mittels einer Gleitlagerung 13 auf der Antriebswelle 2 gelagert. Die Gleitlagerung 13 brauch lediglich geringe, drehmomentabhängige Verdrehungen zwischen der Antriebswelle 2 und der Messhülse 8 oder Abtriebshülse 10 aufzunehmen, da die Messhülse 8 selbst bei einem hohen über die Antriebswelle 2 aufgebrachten Drehmoment lediglich eine geringe Torsion von nicht mehr als höchstens einigen Grad aufweist.

Die Drehmomentbelastung innerhalb der Antriebswelle 2 sowie der Messhülse 8, welche kaum zu einer Torsion der Messhülse 8 führt, ist über geänderte magnetische Eigenschaften der Messhülse 8 detektierbar. Dieser zur Drehmomentmessung genutzte sogenannte magnetoelastische Effekt hat den Vorteil, dass sämtliche rotierenden, Drehmoment übertragenden Teile keine elektrischen Kontaktierungen zur Übertragung von Signalen oder elektrischer Leistung benötigen. Die Auswertesensensorik, mit welcher das in der Messhülse 8 wirkende Drehmoment detektiert wird, ist vielmehr in einer starr innerhalb des Rahmenteils 7 angeordneten Auswerteeinheit 14, auch als Bobin bezeichnet, angeordnet.

Die Auswerteeinheit 14 hat eine zur Antriebswelle 2 konzentrische hohlzylindrische Form und ist mittels einer Schnappkontur 15 am linken Gehäuseteil 3 und hierbei gegen Verdrehung gesichert. Gleichzeitig ist auf der in FIG 1 rechten, dem Kettenblattträger 11 zugewandten Seite der Auswerteeinheit 14 eine radial nach außen gerichtete Montagehilfskontur 16 vorhanden, welche eine Sicherung gegen Falschmontage der Auswerteeinheit 14 darstellt.

Zusätzlich zur Drehmomentmessung ermöglicht das Tretlager 1 auch eine Drehzahlmessung sowie eine Drehrichtungserkennung. Zu diesem Zweck ist auf der Antriebswelle 2 im Bereich axial zwischen dem linken Wälzlager 5, das heißt demjenigen Wälzlager, welches auf der dem Kettenblattträger 11 abgewandten Seite des Rahmenteils 7 angeordnet ist, und der die Antriebswelle 2 mit der Messhülse 8 koppelnden Verzahnung 9 ein Encoder 17 in Form einer eine Maßverkörperung tragenden Scheibe befestigt. Je nach physikalischem Prinzip der Drehzahl- und Drehrichtungsmessung kann die Maßverkörperung beispielsweise durch geometrische, optische und/oder magnetische Eigenschaften verwirklicht sein. In jedem Fall ist ein mit dem Encoder zusammenwirkender, in den FIG 1 bis 3 nicht gesondert erkennbarer Sensor in die Auswerteeinheit 14 integriert.

Jedes der Wälzlager 5,6 ist als Kugellager mit metallischen oder keramischen Kugeln 18,19 als Wälzkörper ausgebildet. Die Wälzlager 5,6 unterscheiden sich hinsichtlich ihrer Dimensionierung, wobei die Kugeln 18 des in FIG 1 linken Wälzlagers 5 größer sind als die Kugeln 19 des Wälzlagers 6, welches dem Kettenblattträger 11 benachbart ist. Letztgenanntes Wälzlager 6 überträgt eine in radialer Richtung auf die Antriebswelle 2 wirkende Belastung auf das Rahmenteil 7, wobei auch die Abtriebshülse 10 und die Gleitlagerung 13 im Kraftfluss liegen. Es existiert mindestens eine zur Antriebswelle 2 normale Ebene, welche sowohl die Gleitlagerung 13, die Abtriebshülse 10, als auch das Wälzlager 6, insbesondere dessen Kugeln 19, schneidet.

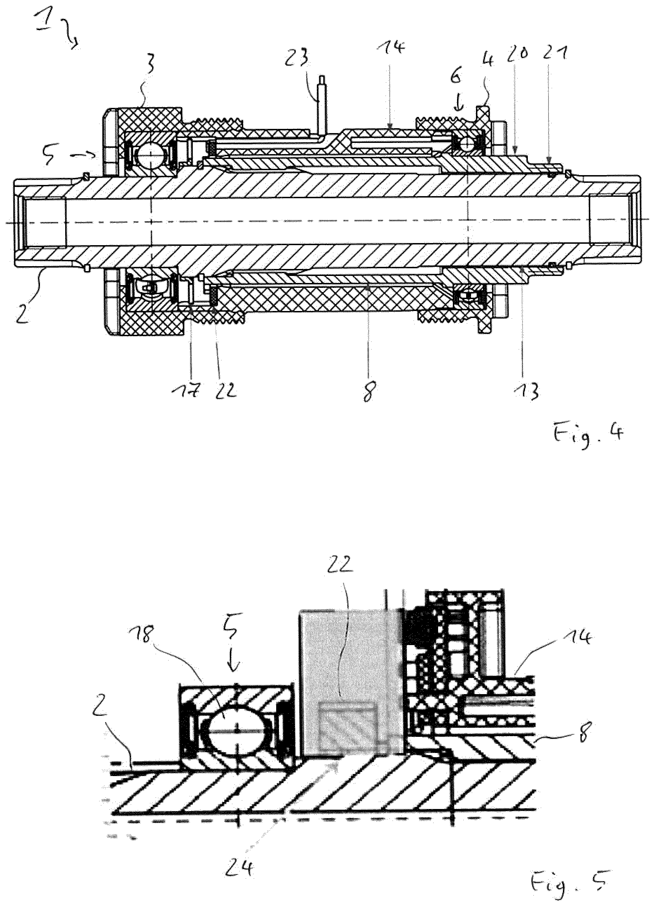

Das Ausführungsbeispiel nach FIG 4 unterscheidet sich hinsichtlich seiner Funktion nicht vom Ausführungsbeispiel nach den FIG 1 bis 3. Ein Kettenblattträger ist in FIG 4 nicht dargestellt, ist jedoch, ebenso wie im Ausführungsbeispiel nach den FIG 1 bis 3, auf der in der Darstellung rechten Seite des Tretlagers 1 angeordnet. Eine für die Montage des Kettenblattträgers oder einer Riemenscheibe (im Fall eines Riemenantriebs) geeignete Kettenblattschnittstelle ist mit dem Bezugszeichen 20. Ein Gewinde 21 auf der Abtriebswelle 10 dient der Montage der in FIG 4 ebenfalls nicht dargestellten Kontermutter 12.

Zusätzlich zum Encoder 17 ist in FIG 4 der mit diesem zusammenwirkende, in der Auswerteeinheit 14 angeordnete Sensor, welcher in FIG 4 das Bezugszeichen 22 trägt, erkennbar. Der Sensor 22 ist an eine Leitung 23 angeschlossen. Ebenso sind elektrische Anschlüsse der mindestens einen Spule, welche eine wesentliche Komponente der Auswerteeinheit 14 darstellt und der Detektion von magnetischen Eigenschaften der Messhülse 8 dient, vorhanden. Eine elektrische Kontaktierung rotierender Teile ist jedoch prinzipbedingt nicht erforderlich.

Unabhängig von der momentanen mechanischen Belastung der beiden mit der Antriebswelle 2 verbunden Tretkurbeln misst die Anordnung aus Messhülse 8 und Auswerteeinheit 14 stets die Summe des über beide Tretkurbeln in die Antriebswelle 2 eingeleiteten Drehmoments. An Stelle der Gleitlagerung 13 könnte alternativ eine Wälzlagerung, beispielsweise ein Nadellager, vorhanden sein. Eine solche Wälzlagerung der Messhülse 8 auf der Antriebswelle 2 stellt zwar keine Änderung des Messprinzips dar, ist aber geeignet, die Messgenauigkeit insbesondere in Betriebszuständen mit geringer Last weiter zu erhöhen, da kein Losbrechmoment, wie bei der Gleitlagerung 13, zu überwinden ist.

Im Ausführungsbeispiel nach FIG 5 befindet sich der Sensor 22 auf einer Ringplatine 24, welche eine Komponente der Auswerteeinheit 14 darstellt und mit dem übrigen, im Wesentlichen zylindrischen Teil der Auswerteeinheit 14 fest verbunden oder verbindbar ist. In jedem Fall handelt es sich bei der Ringplatine 24 um ein nicht rotierendes Teil. Bei der Montage der verschiedenen messtechnischen Komponenten des Tretlagers 1 ist die Möglichkeit gegeben, zunächst den Encoder 17 mit zugehörigem, auf der Ringplatine 24 angeordneten Sensor 22 auf der Welle 2 beziehungsweise fest relativ zum Gehäuseteil 3 und damit auch zum Außenring des Wälzlagers 5 zu montieren, bevor die weiteren Komponenten der Auswerteeinheit 14 montiert werden.

Das Tretlager 1 ist in jeder der erläuterten Ausführungsformen für Zweiräder mit motorischer Unterstützung, aber beispielsweise auch für Ergometer, geeignet.

### Bezugszeichenliste

- 1: Tretlager
- 2: Antriebswelle
- 3: Gehäuseteil
- 4: Gehäuseteil
- 5: Wälzlager
- 6: Wälzlager
- 7: Rahmenteil
- 8: Messhülse
- 9: Verzahnung
- 10: Abtriebshülse
- 11: Kettenblattträger
- 12: Kontermutter
- 13: Gleitlagerung
- 14: Auswerteeinheit
- 15: Schnappkontur
- 16: Montagehilfskontur
- 17: Encoder
- 18: Kugel
- 19: Kugel
- 20: Kettenblattschnittstelle
- 21: Gewinde
- 22: Sensor
- 23: Leitung
- 24: Ringplatine

## Patentansprüche

1. Tretlager, insbesondere eines Fahrrads mit elektrischem Hilfsantrieb, mit
- einer Antriebswelle (2), welche zur Verbindung mit zwei Pedalen vorgesehen ist,
- zwei die Antriebswelle lagernden Wälzlagern (5,6) unterschiedlicher Dimensionierung,
- einer axial zwischen den Wälzlagern (5,6) angeordneten, die Antriebswelle (2) umschließenden, zur Messung der Summe des von beiden Pedalen in die Antriebswelle (2) eingeleiteten Drehmoments vorgesehenen Messhülse (8), welche drehfest mittels einer Verzahnung (9) mit der Antriebswelle (2) verbunden ist,
- einer in axialer Verlängerung der Messhülse (8) angeordneten, mit dieser drehfest verbundenen, zur Verbindung mit einem Kettelblattträger (11) vorgesehenen Abtriebshülse (10),
- einer Gleitlagerung (13) zwischen der Abtriebshülse (10) und der Antriebswelle (2),
- einem stirnseitig der Messhülse (8), auf deren der Abtriebshülse (10) abgewandten Seite angeordneten Encoder (17), welcher zur Drehzahl- und Drehsinnmessung der Antriebswelle (2) vorgesehen ist, **dadurch gekennzeichnet, dass** das Tretlager eine die Messhülse (8) koaxial umgebenden Auswerteeinheit (14) aufweist, welche mit der Messhülse (8) sowie mit dem Encoder (17) zusammenwirkt, wobei
- das der Abtriebshülse (10) benachbarte Wälzlager (6) kleinere Wälzkörper (19) als das dem Encoder (17) benachbarte Wälzlager (5) aufweist, und wobei
- eine erste, dem Encoder (17) zugewandte Seite der Auswerteeinheit (14) per Schnappkontur (15) drehfest relativ zu einem Außenring des dem Encoder (17) benachbarten Wälzlagers (5) gehalten ist, und an einer zweiten, dem Kettenblattträger (11) zugewandten Seite der Auswerteeinheit (14) diese eine radial nach außen ragende Montagehilfskontur (16) aufweist, die dazu ausgebildet ist, gegen Falschmontage der Auswerteeinheit (14) zu sichern.

2. Tretlager nach Anspruch 1, **dadurch gekennzeichnet, dass** die Gleitlagerung (13) radial innerhalb des dem Kettelblattträger (11) benachbarten Wälzlagers (6) angeordnet ist, wobei sich die axiale Erstreckung - bezogen auf die Rotationsachse der Antriebswelle (2) - der Gleitlagerung (13) mit der axialen Positionierung dieses Wälzlagers (6) zumindest überschneidet.

3. Tretlager nach einem der Ansprüche 1 oder 2, **gekennzeichnet durch** eine drehfest relativ zur Auswerteeinheit (14) angeordnete Ringplatine (24), auf welcher ein mit dem Encoder (17) zusammenwirkender Sensor (22) angeordnet ist.

## Claims

1. Bottom bracket, in particular of a bicycle with auxiliary electric drive, comprising
- a drive shaft (2), which is provided to be connected to two pedals,
- two rolling bearings (5, 6) of different dimensions, supporting the drive shaft,
- a measuring sleeve (8) which is arranged between the rolling bearings (5, 6), encloses the drive shaft (2), is provided to measure the sum of the torque introduced into the drive shaft (2) from the two pedals and is rotationally fixedly connected to the drive shaft (2) by means of toothing (9),
- an output sleeve (10) which is arranged in the axial extension of the measuring sleeve (8), is rotationally fixedly connected to the latter and is provided to be connected to a chain-wheel carrier (11),
- a sliding bearing between the output sleeve (10) and the drive shaft (2),
- an encoder (17), which is arranged at the end of the measuring sleeve (8), on the side facing away from the output sleeve (10), and which is provided to measure the rotational speed and direction of rotation of the drive shaft (2), **characterized in that** the bottom bracket has an evaluation unit (14) surrounding the measuring sleeve (8) coaxially, which interacts with the measuring sleeve (8) and with the encoder (17), wherein
- the rolling bearing (6) adjacent to the output sleeve (10) has smaller rolling elements (19) than the rolling bearing (5) adjacent to the encoder (17), and wherein
- a first side of the evaluation unit (14), facing the encoder (17) is kept rotationally fixed relative to an outer ring of the rolling bearing (5) adjacent to the encoder (17) by a snap-in contour (15), and, on a second side of the evaluation unit (14), facing the chain-wheel carrier (11), the said evaluation unit (14) has an auxiliary mounting contour (16) projecting radially outwards, which is designed to safeguard against erroneous mounting of the evaluation unit (14).

2. Bottom bracket according to Claim 1, **characterized in that** the sliding bearing (13) is arranged radially inside the rolling bearing (6) adjacent to the chain-wheel carrier (11), wherein - in relation to the axis of rotation of the drive shaft (2) - the axial extent of the sliding bearing (13) at least overlaps the axial positioning of this rolling bearing (6).

3. Bottom bracket according to either of Claims 1 and 2, **characterized by** an annular circuit board (24) which is arranged rotationally fixedly relative to the evaluation unit (14) and on which a sensor (22) interacting with the encoder (17) is arranged.

## Revendications

1. Boîtier de pédalier, en particulier d'une bicyclette à entraînement auxiliaire électrique, comportant
- un arbre d'entraînement (2) prévu pour être relié à deux pédales,
- deux paliers de roulement (5, 6) supportant l'arbre d'entraînement de dimensionnements différents,
- un manchon de mesure (8) disposé axialement entre les paliers de roulement (5, 6), entourant l'arbre d'entraînement (2), prévu pour la mesure de la somme des couples introduits par les deux pédales dans l'arbre d'entraînement (2), qui est relié solidaire en rotation à l'arbre d'entraînement au moyen d'un engrenage (9),
- un manchon de sortie (10) disposé dans le prolongement axial du manchon de mesure (8), relié solidaire en rotation à celui-ci, prévu pour la liaison à une porte-plateau (11),
- un palier lisse (13) entre le manchon de sortie (10) et l'arbre d'entraînement (2),
- un codeur (17) disposé à l'avant du manchon de mesure (8) sur son côté tourné à l'opposé du manchon de sortie (10), qui est prévu pour la mesure de la vitesse de rotation et du sens de rotation de l'arbre d'entraînement (2),
**caractérisé en ce que** le boîtier de pédalier comporte une unité d'évaluation (14) entourant coaxialement le manchon de mesure (8),
qui coopère avec le manchon de mesure (8) ainsi qu'avec le codeur (17), dans lequel
- le palier de roulement (6) adjacent au manchon de sortie (10) comporte des corps de roulement (19) plus petits que le palier de roulement (5) adjacent au codeur (17), et dans lequel
- un premier côté de l'unité d'évaluation (14) tourné vers le codeur (17) est maintenu solidaire en rotation par un contour d'encliquetage (15) par rapport à un anneau extérieur du palier de roulement (5) adjacent au codeur (17), et sur un second côté de l'unité d'évaluation (14), tourné vers le porte-plateau (11), celle-ci comporte un contour auxiliaire de montage (16) faisant radialement saillie vers l'extérieur, et qui est conçu pour éviter un montage erroné de l'unité d'évaluation (14).

2. Boîtier de pédalier selon la revendication 1, **caractérisé en ce que** le palier lisse (13) est disposé radialement vers l'intérieur du palier de roulement (6) adjacent au porte-plateau (11), dans lequel l'extension axiale - par rapport à l'axe de rotation de l'arbre d'entraînement (2) - du palier lisse (13) présente au moins un chevauchement avec le positionnement axial dudit palier de roulement (6).

3. Boîtier de pédalier selon l'une des revendications 1 ou 2, **caractérisé par** une carte annulaire (24) disposée solidaire en rotation par rapport à l'unité d'évaluation (14), sur laquelle est disposé un capteur (22) coopérant avec le codeur (17).
